# EUROPEAN PATENT APPLICATION

(11) **EP 3 819 696 A1**
(43) Date of publication of application: **12.05.2021**
(21) Application number: 20194141.6
(22) Date of filing: 02.09.2020
(51) Int. Cl.: G02B 27/00, G06F 3/01, G06F 3/147

(54) **DISPLAY SYSTEM**

(30) Priority: 05.11.2019 US 201962930586 P; 12.08.2020 US 202016991050
(71) Applicant: HTC Corporation, Taoyuan City 330 (TW)
(72) Inventor: CHOI, Iok Kan, 330 Taoyuan City (TW); YANG, Po-Sen, 330 Taoyuan City (TW); WAN, Shiang-Ting, 330 Taoyuan City (TW); DING, Ling-Yi, 330 Taoyuan City (TW)
(74) Representative: Wimmer, Hubert

(57) **Abstract**

A display system includes an operation device and a display device. The operation device receives status information and a display image, and analyze the display image according to the status information to generate a foveal image, a background image, and positioning information corresponding to the foveal image. The display device is coupled to the operation device, and is configured to detect eyeball status of a user to generate the status information; receive the foveal image, the background image, and the positioning information; and enlarge the background image to generate an enlarged background image and combine the foveal image with the enlarged background image according to the positioning information to generate an output image.

## Description

### CROSS-REFERENCE TO RELATED APPLICATION

This application claims the priority benefit of U.S. Provisional Application No. 62/930,586, filed on November 5, 2019. The entirety of the above-mentioned patent application is hereby incorporated by reference herein and made a part of this specification.

### BACKGROUND

### [Technical Field]

The invention relates to a display system, and particularly to a display system that provides a virtual image display effect.

### [Description of Related Art]

With the advancement of electronic technology, demands by users has increased for a visual sensory experience that a display device can provide. Therefore, a display technology of so-called virtual reality is proposed.

In the conventional technical field, hardware developers of virtual reality display devices often face the problems of transmission bandwidth insufficiency and/or excessively long computation time by processing units due to high specification display requirements. To solve such problems, the hardware developers can only adopt high specification graphics processing chips and provide high specification data transmission accessories. However, such methods often cause excessively high costs of the display devices and decrease price competitiveness of the products.

### SUMMARY

The invention provides a display system that reduces a load and computation time of graphic processing of a display image.

The display system of the invention includes an operation device and a display device. The operation device receives status information and a display image, and analyze the display image according to the status information to generate a foveal image, a background image, and positioning information corresponding to the foveal image. The display device is coupled to the operation device, and is configured to detect eyeball status of a user to generate the status information; receive the foveal image, the background image, and the positioning information; and enlarge the background image to generate an enlarged background image and incorporate the foveal image into the enlarged background image according to the positioning information to generate an output image.

Based on the foregoing, the invention divides the display image into the foveal image and the background image through the operation device according to the status information, and perform processing on the foveal image and background image to different extents of refinement. The display device receives the foveal image, the background image, and the positioning information, and combines the foveal image and background image according to the positioning information to generate the display image. In this way, in both image processing and transmission of relevant information, it is possible to effectively save bandwidth, provide efficiency in processing, and effectively save required power consumption.

### BRIEF DESCRIPTION OF THE DRAWINGS

FIG. 1 illustrates a schematic diagram of a display system in an embodiment of the invention.
FIG. 2 illustrates a schematic diagram of a display system in another embodiment of the invention.
FIG. 3 illustrates a schematic diagram of a method for generating an output image in the embodiment of the invention.

### DESCRIPTION OF THE EMBODIMENTS

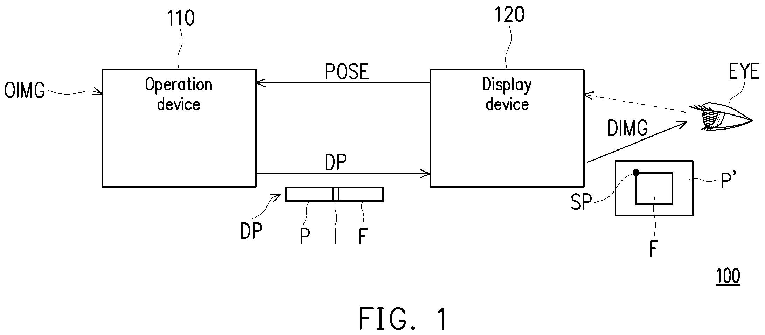

Referring to FIG. 1, FIG. 1 illustrates a schematic diagram of a display system in an embodiment of the invention. A display system 100 provides a virtual reality (VR) display effect. Naturally, the display system 100 also provides augmented reality (AR) and mixed reality display effects. The display system 100 includes an operation device 110 and a display device 120. The operation device 110 receives status information POSE and a display image OIMG. The operation device 110 also analyzes the display image OIMG according to the status information POSE to generate a foveal image F, a background image P, and positioning information I corresponding to the foveal image F. Herein, the status information POSE is provided by the display device 120. The display device 120 may generate the status information POSE by detecting eyeball status of an eyeball EYE of a user. According to the status information POSE, the operation device 110 recognizes in the display image OIMG an area at which the user is gazing and an area at which the user is not gazing, and divides the display image OIMG into images corresponding to the gazed area and the non-gazed area to obtain the foveal image F and the background image P. Also, the operation device 110 further generates the positioning information I corresponding to the foveal image F according to a relative positional relationship between the foveal image F and the background image P.

Herein, note that on the basis that the foveal image F is an image that the user is looking at and is located in a sensitive area of a human eye, the operation device 110 may thus perform more refined and optimized image processing on the foveal image F. The background image P is not an image that the user is looking at and is located in a non-sensitive area of the human eye. Therefore, the operation device 110 may perform coarser image processing on the background image P. Accordingly, a resolution of the foveal image F generated by the operation device 110 may be higher than a resolution of the background image P.

In this embodiment, the operation device 110 may combine the foveal image F, the background image P, and the positioning information I into combination information DP in a form of an image, and transmit the foveal image F, the background image P, and the positioning information I to the display device 120 through transmitting the combination information DP to the display device 120. Herein, the transmission and reception of the combination information DP may be performed through wired or wireless communication.

The operation device 110 may sequentially transmit the foveal image F, the positioning information I, and the background image P as a sequence to decrease a demand for a transmission bandwidth.

On the other hand, the display device 120 receives the combination information DP, and obtains through analysis the foveal image F, the background image P, and the positioning information I in the combination information DP. The display device 120 may enlarge the background image P to obtain an enlarged background image P'. Then, the display device 120 incorporates the foveal image F into the enlarged background image P' according to the positioning information I to generate the output image DIMG.

The display device 120 may enlarge the background image P according to a dimension of a display panel of the display device 120. In addition, the display device 120 may establish a coordinate system according to the display panel of the display device 120. Therein, the positioning information I corresponds to a coordinate value of a set point SP on the foveal image F.

The display device 120 generates the output image DIMG through superimposing the foveal image F onto the enlarged background image P', and provides the output image DIMG to the eyeball EYE of the user to generate visual effects.

It can be known from the foregoing description that through refining the foveal image F, the visual effect for the user can be maintained. By coarsening the background image P, the computation time of graphic processing and the bandwidth required for data transmission can be effectively decreased. Therefore, on the premise that the display effect is not reduced, the display system 100 in this embodiment can effectively decrease the bandwidth required for data transmission and decrease hardware requirements for graphic processing.

Incidentally, before performing the transmission of the combination information DP, the operation device 110 may further perform data compression of the combination information DP to further decrease the bandwidth required for the data transmission of the combination information DP.

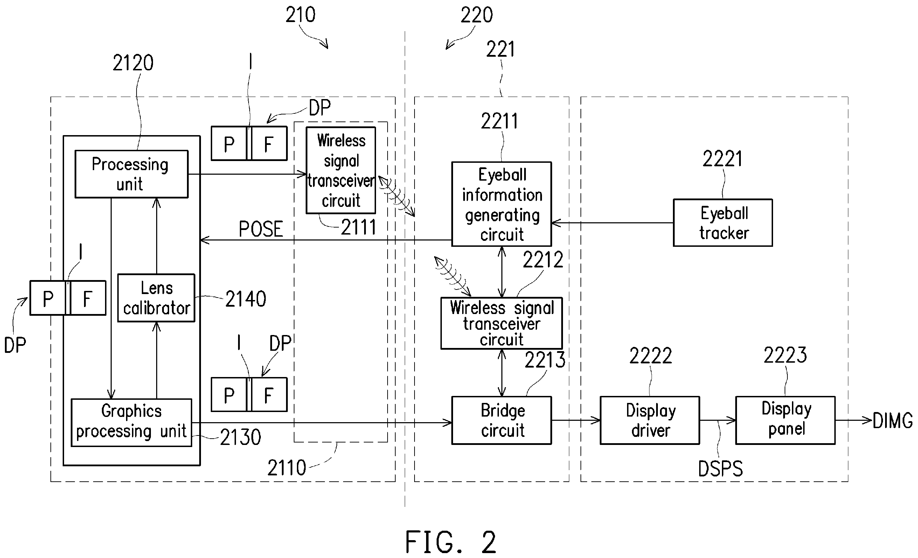

In the following, reference is made to FIG. 2. FIG. 2 illustrates a schematic diagram of a display system in another embodiment of the invention. A display system 200 includes an operation device 210 and a display device 220. The operation device 210 is coupled to the display device 220 in a wired or wireless manner. The operation device 210 includes a communication interface 2110, a processing unit 2120, a graphics processing unit 2130, and a lens calibrator 2140. In this embodiment, the processing unit 2120 may receive status information POSE through the communication interface 2110, and divide a display image into a foveal image F, a background image P, and positioning information I according to the status information POSE. The processing unit 2120 may transmit the foveal image F, the background image P, and the positioning information I to the graphics processing unit 2130 to perform image processing. In addition, the lens calibrator 2140 may compensate for the foveal image F, the background image P, and the positioning information I according to lens aberration information in the display system 200.

In this embodiment, the processing unit 2120 may combine the foveal image F, the background image P, and the positioning information I into combination information DP in a form of an image. In addition, the processing unit 2120 may transmit the combination information DP to a wireless signal transceiver 2111 in the communication interface 2110. Alternatively, the graphics processing unit 2130 may transmit the combination information DP to the display device 220 in a wired manner through a transmission wire in the communication interface 2110.

As for the display device 220, the display device 220 includes an interface circuit 221, an eyeball tracker 2221, a display driver 2222, and a display panel 2223. The interface circuit 221 includes an eyeball information generating circuit 2211, a wireless signal transceiver circuit 2212, and a bridge circuit 2213. The eyeball information generating circuit 2211 is coupled to the eyeball tracker 2221. The eyeball tracker 2221 is configured to track position status of an eyeball of a user to obtain eyeball status of the user. The eyeball information generating circuit 2211 may generate the status information POSE according to the eyeball status of the user. Herein, the eyeball tracker 2221 may track the eyeball applying a manner well known to those having common knowledge in the field, and is not specifically limited. The eyeball information generating circuit 2211 may be implemented with a chip. The eyeball information generating circuit 2211 may also be implemented applying an image signal processor (ISP) known to those skilled in the field, and is not specifically limited.

In addition, the bridge circuit 2213 is coupled to the display driver 2222, and may be coupled to the graphics processing unit 2130 in a wired manner. The bridge circuit 2213 may receive the combination information DP from the graphics processing unit 2130, and forward the combination information DP to the display driver 2222. On the other hand, the bridge circuit 2213 is coupled to the wireless signal transceiver circuit 2212. The wireless signal transceiver circuit 2212 may perform wireless communication with the wireless signal transceiver circuit 2111 to perform data transmission and reception. The bridge circuit 2213 may also receive the combination information DP transmitted from the operation device 210 through the wireless signal transceiver circuit 2212, and forward the combination information DP to the display driver 2222.

The display driver 2222 decodes the combination information DP to obtain the background image P, the foveal image F, and the positioning information I. The display driver 2222 enlarges the background image P to generate an enlarged background image, and incorporates the foveal image F into the enlarged background image according to the positioning information I to generate a display driving signal DSPS. The display driver 2222 transmits the display driving signal DSPS to the display panel 2223, and drives the display panel 2223 to generate an output image DIMG. Moreover, if the combination information DP is compressed information, the display driver 2222 may first perform decompression of the combination information DP.

In this embodiment, the display panel 2223 may be any kind of display panel well known to those skilled in the field, and is not particularly limited.

Herein it is notable that, in this embodiment, when the wired connection between the display device 220 and the operation device 210 is validly formed, the wireless signal transceiver circuit 2212 and the wireless signal transceiver circuit 2111 may be turned off to save power consumption. At this time, regarding data transmission between the display device 220 and the operation device 210, the combination information DP and the status information POSE may be transmitted through the data transmission wire between the display device 220 and the operation device 210. On the other hand, when the wired connection between the display device 220 and the operation device 210 is disconnected, the wireless signal transceiver circuit 2212 and the wireless signal transceiver circuit 2111 may be turned on. The transmission of the combination information DP and the status information POSE between the display device 220 and the operation device 210 may be performed through the wireless signal transceiver circuit 2212 and the wireless signal transceiver circuit 2111.

In this embodiment, the wireless signal transceiver circuit 2212 and the wireless signal transceiver circuit 2111 may perform wireless communication through any wireless communication protocol well known to those skilled in the field, and is not particularly limited.

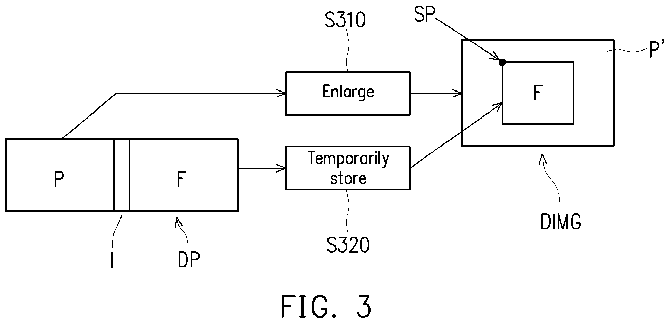

In the following, reference is made to FIG. 3. FIG. 3 illustrates a schematic diagram of a method for generating an output image in the embodiment of the invention. In FIG. 3, the display driver may decode the received combination signal DP and obtain the background image P, the foveal image F, and the positioning information I. A storage device (e.g., random access memory) may be disposed in the display driver, and the foveal image F may be temporarily stored in the random access memory through step S320. Also, through step S310, the display driver may enlarge the background image P according to a dimension of the display panel, and thereby obtain the enlarged background image P'.

Based on the dimension of the display panel, the display driver may set up a coordinate system. After generating the enlarged background image P', the display driver may read out the foveal image F from the random access memory, superimpose the foveal image F onto the proper position on the enlarged background image P' according to the positioning information I, and generate the output image DIMG. Herein, the positioning information I may be adopted to indicate a coordinate value of a set point SP on the foveal image F. In this embodiment, the set point SP may be set at any one of four end points of the foveal image F. Alternatively, in other embodiments of the invention, the set point SP may also be set at a geometric center of the foveal image F or another position, and is not particularly limited.

In summary of the foregoing, the invention divides the display image into a foveal image and a background image according to the area that the user is watching, and generates the positioning information according to the position of the foveal image. In the invention, the visual quality can be further maintained for the user through setting the foveal image with a relatively high resolution for, and decreases the bandwidth required for the graphic processing through setting the background image with a relatively low resolution. In this way, the display system of the invention can effectively reduce the workload of the graphics processing unit, decrease the transmission bandwidth required for image information transmission, reduce the required power consumption, and increase the performance of the display system on the premise that the display quality is provided.

## Claims

1. A display system, comprising:
an operation device receiving a status information and a display image, and analyzing the display image according to the status information to generate a foveal image, a background image, and positioning information corresponding to the foveal image; and
a display device coupled to the operation device, and being configured to:
detect eyeball status of a user to generate the status information;
receive the foveal image, the background image, and the positioning information; and
enlarge the background image to generate an enlarged background image, and incorporate the foveal image into the enlarged background image to generate an output image according to the positioning information.

2. The display system as described in claim 1, wherein the operation device combines the foveal image, the background image, and the positioning information into combination information in a form of an image, and transmits the combination information to the display device.

3. The display system as described in claim 1, wherein the operation device comprises:
a processing unit analyzing the display image according to the status information to generate the foveal image, the background image, and the positioning information; and
a communication interface transmitting the foveal image, the background image, and the positioning information to the display device.

4. The display system as described in claim 3, wherein the communication interface communicates with the display device in a wired or wireless manner.

5. The display system as described in claim 3, wherein the operation device further comprises:
a graphics processing unit coupled to the processing unit, and performing image processing on the foveal image and the background image; and
a lens calibrator coupled between the processing unit and the graphics processing unit, and compensating for the foveal image, the background image, and the positioning information according to lens aberration information of the display device.

6. The display system as described in claim 1, wherein the display device comprises:
an eyeball tracker configured to detect the eyeball status of the user;
a display driver enlarging the background image to generate the enlarged background image, and incorporating the foveal image into the enlarged background image according to the positioning information to generate a display driving signal;
a display panel coupled to the display driver, and generating the output image according to the display driving signal; and
an interface circuit communicating with the operation device, and being configured to receive the foveal image, the background image, and the positioning information.

7. The display system as described in claim 6, wherein the interface circuit is coupled to the operation device in a wired or wireless manner.

8. The display system as described in claim 6, wherein the interface circuit is further configured to transmit the status information to the operation device.

9. The display system as described in claim 6, wherein the interface circuit comprises:
an eyeball information generating circuit coupled to the eyeball tracker, and generating the status information according to the eyeball status of the user;
a bridge circuit coupled to the display driver, and being configured to provide combination information formed according to the foveal image, the background image, and the positioning information; and
a wireless signal transceiver circuit coupled to the eyeball information generating circuit and the bridge circuit, and performing wireless communication with the operation device.

10. The display system as described in claim 9, wherein when the bridge circuit and the eyeball information generating circuit are coupled to the operation device in a wired manner, the wireless signal transceiver circuit is turned off; and when connections of the bridge circuit and the eyeball information generating circuit with the operation device are disconnected, the wireless signal transceiver circuit is activated to perform wireless communication.

11. The display system as described in claim 1, wherein the display driver sets a coordinate value of a set point of the foveal image according to the positioning information, and incorporates the foveal image into the enlarged background image according to the coordinate value of the set point to generate the display image.

12. The display system as described in claim 1, wherein a resolution of the foveal image is higher than a resolution of the background image.
